# EUROPÄISCHE PATENTANMELDUNG

(11) **EP 2 108 898 A1**
(43) Veröffentlichungstag der Anmeldung: **14.10.2009**
(21) Anmeldenummer: 08008609.3
(22) Anmeldetag: 07.05.2008
(51) Int. Cl.: F24J 2/04, F24J 2/52, H01L 31/042

(54) **Befestigungssystem für Solarmodule**

(30) Priorität: 29.08.2007 FR 0706042
(71) Anmelder: HaWi Energietechnik AG, 84307 Eggenfelden (DE)
(72) Erfinder: Schoger, Klaus, 84307 Eggenfelden (DE)
(74) Vertreter: Rothkopf, Ferdinand

(57) **Zusammenfassung**

Es wird ein Befestigungssystem für Solarmodule mit einem auf einer Dachunterkonstruktion (10) ortsfest angebrachten Trapezblech (22), mindestens einer Leiste (30), welche an dem Trapezblech (22) ortsfest angebracht ist, und mindestens einer Halteklammer (62, 66) zum Haltern mindestens eines Solarmoduls (50), welche an der mindestens einen Leiste (30) ortsfest angebracht ist, vorgeschlagen.

## Beschreibung

### Hintergrund der Erfindung

Die Erfindung betrifft ein Befestigungssystem für Solarmodule, mittels dem derartige Solarmodule auf einer Dachunterkonstruktion angebracht werden können. Ferner betrifft die Erfindung ein Verfahren zum Befestigen von mindestens einem Solarmodul auf einer Dachunterkonstruktion. Insbesondere ist die Erfindung dahingehend gerichtet, in einer bestehenden Dachhaut Solarmodule zu integrieren und diese in einer so genannten "roof-in" Bauweise anzuordnen, bei der die Dachhaut als solche entfernt wird und die Solarmodule nachfolgend in der Ebene der Dachhaut eingesetzt werden. Die Solarmodule ersetzen also die Dachhaut, wobei der Grund für dieses Ersetzen der Dachhaut insbesondere darin liegt, das die Dachfläche als solche erhalten bleibt, die Solarmodule in dieser integriert sind und im Wesentlichen nicht oder nur geringfügig über die Dachfläche nach oben herausragen.

### Zugrundeliegende Aufgabe

Der Erfindung liegt die Aufgabe zugrunde, eine Möglichkeit einer Befestigung von Solarmodulen an einer Dachunterkonstruktion bereitzustellen, die eine verhältnismäßig einfache und kostengünstige Montage der Solarmodule zulässt und zugleich sicherstellt, dass die Solarmodule über ihre Lebendsdauer hinweg sicher an der Dachunterkonstruktion gehaltert sind. Ferner ist den Anforderungen der Dachhaut im Hinblick auf Dichtigkeit und ästhetische Erscheinung gerecht zu werden.

### Erfindungsgemäße Lösung

Diese Aufgabe ist erfindungsgemäß mit einem Befestigungssystem gemäß Anspruch 1 und einem Verfahren gemäß Anspruch 8 gelöst. Vorteilhafte Weiterbildungen der erfindungsgemäßen Lösung sind in den abhängigen Ansprüchen beschrieben.

Erfindungsgemäß ist ein Befestigungssystem für Solarmodule geschaffen, mit einem auf einer Dachunterkonstruktion ortsfest angebrachten Trapezblech, mindestens einer Leiste, welche an dem Trapezblech ortsfest angebracht ist, und mindestens einer Halteklammer zum Haltern mindestens eines Solarmoduls, welche an der mindestens einen Leiste ortsfest angebracht ist. Bei dem erfindungsgemäßen Befestigungssystem ist mit dessen Trapezblech eine mehrfache Wirkung erzielt, da das Trapezblech nicht nur zum fluiddichten Verschließen der Dachhaut verwendet wird, sondern zugleich als Tragkonstruktion für das Anbringen und Haltern der Solarmodule. Darüber hinaus sind an dem Trapezblech unter den Solarmodulen Leisten angeordnet, auf denen die Solarmodule aufgelegt werden. Diese Leisten, die insbesondere als Montage-C-Profile bzw. Schienen gestaltet sind, dienen zum lagegenauen Abstützen der Solarmodule, denn an den Leisten können vorteilhaft Halteklemmen angesetzt und befestigt werden, und sie dienen insbesondere auch zum elektrisch leitenden Verbinden der Solarmodule untereinander. Das erfindungsgemäße Befestigungssystem ist dadurch geeignet, um Solarmodule unterschiedlichster Größen auf beliebigen Dachunterkonstruktionen anzubringen. Besonders eignet sich das Befestigungssystem für Dachneigungen zur Horizontalen von 03° bis 65°. Das Befestigungssystem ist als erstmalige Eindeckung oder besonders bevorzugt als Ersatz für fast alle Arten von Dacheindeckungen geeignet. Das Befestigungssystem ist überall einsetzbar, unabhängig davon, ob ein gesamtes Dach oder nur dessen Teilbereich mit Solarmodulen belegt werden sollen. Seine Anwendung findet das Befestigungssystem sowohl im Bereich der Altbausanierung als auch bei Neubauten. Ferner kann das Befestigungssystem aufgrund der kombinierten Verwendung von Trapezbleichen und Leisten auf das jeweilige Projekt individuell ausgelegt werden. Sämtliche Anforderungen können durch die erfindungsgemäße Kombination dieser Elemente in besonders einfacher Weise erreicht werden.

Darüber hinaus ist das erfindungsgemäße Befestigungssystem besonders geeignet und angepasst, um Solarmodule in geneigte Dächer zu integrieren. Dies wird dadurch erreicht, dass das erfindungsgemäße Trapezblech im Austausch zu einer andersartigen Dachhaut, insbesondere einer Lage Dachpfannen, an der Dachunterkonstruktion angebracht ist bzw. wird. Der Grundgedanke ist dabei die andersartige Dachhaut in jenem Bereich zu entfernen, in dem die Solarmodule angebracht werden sollen, und durch Trapezbleche zu ersetzen, die insbesondere die Dichtigkeit des gesamten Systems gewährleisten. Diese Art des Einbaus von Solarmodulen in ein Dach eignet sich besonders für Dächer mit Dachpfannen, wobei dann die Dachpfannen im relevanten Bereich entfernt werden, um sie durch Trapezbleche zu ersetzen. Die Trapezbleche werden gemäß den Herstellerrichtlinien in Abhängigkeit von den Gegebenheiten vor Ort verlegt. Hierbei werden nicht nur die baulichen Aspekte des zu belegenden Dachs beachtet, sondern vielmehr auch die auf das Dach einwirkenden Wind- und Schneebelastungen. Der statische Nachweis des erfindungsgemäßen Systems wurde bis zu einer Schneelast von 4,30 kN/m² und einem Staudruck von 1,40 kN/m² erbracht. In Abhängigkeit von diesen Einflussfaktoren werden für die Trapezbleche, die besonders bevorzugt in Bahnen verlegt werden, die erforderliche Profilform und die Mindestanzahl Befestigungspunkte pro Dachflächenanteil ermittelt. Gemäß dieser Mindestanzahl wird dann die Dachunterkonstruktion gegebenenfalls in bestimmten Bereichen ergänzt oder verstärkt.

Auf die Trapezbleche sind bzw. werden, wie erwähnt, Leisten als modultragende Schienen aufgebracht. Die mindestens eine Leiste ist vorteilhaft mittels eines Halteelements an dem Trapezblech angebracht, an dem die Leiste formschlüssig eingehakt ist. Besonders bevorzugt ist die mindestens eine Leiste mittels eines Halteelements befestigt, welches auf das Trapezblech genietet oder auch mit Blechschrauben befestigt ist. Zum Nieten oder Schrauben werden besonders vorteilhaft Blindniete oder selbstbohrende Blechschrauben verwendet, die zwar durch das Trapezblech hindurch geführt werden, die darunter liegende Dachkonstruktion im Übrigen aber nicht beeinflussen. Bestehende Normen und Verarbeitungsrichtlinien der Hersteller der einzelnen Bauteile können, da sich die Bauteile dabei gegenseitig weitestgehend nicht beeinflussen, auf diese Weise besonders gut eingehalten werden. Um eine hermetische Abdichtung der erfindungsgemäß gestalteten Dachfläche zu gewährleisten und eine Kontaktkorrosion zwischen den unterschiedlichen metallischen Materialien Stahl (Trapezblech) und Aluminium (Leiste) zu vermeiden, wird bevorzugt zwischen dem einzelnen Halteelement und dem zugehörigen Trapezblech ein Dichtelement angebracht. Dieses Dichtelement ist bevorzugt eine Dichtfolie bzw. ein Dichtband, welche auf das Trapezbleich im relevanten Flächenbereich aufgeklebt wird.

Bevorzugt werden bei dem erfindungsgemäßen Befestigungssystem ferner zwei Leisten an einander gegenüberliegend angeordneten Halteelementen formschlüssig eingehakt und auf diese Weise an dem Trapezblech angebracht, auf denen nachfolgend mindestens ein Solarmodul aufgesetzt ist. Durch ein beidseitiges oder wechselseitiges Einsetzen der Halteelemente, die mit geringfügiger Spannung auf beiden Seiten der Leisten angebracht werden, kann sichergestellt werden, dass die Leisten an ihrer Position an den Halteelementen ortsfest verbleiben, wenngleich sie dort nur eingehakt sind. Es wird also in mehreren Schritte eine ortsfeste Lagefixierung der Solarmodule erreicht, wobei die einzelnen Montageschritte und insbesondere das Einhaken der Leisten an den Halteelementen besonders einfach durchgeführt werden können.

Vorteilhaft sind bei dem Befestigungssystem gemäß der Erfindung darüber hinaus die einzelnen Leisten an einer ihrer Seiten mit einer ersten Nut zum Einhaken des Halteelements gestaltet. Zusätzlich ist es von Vorteil, wenn auch an der anderen Seite der Leisten eine derartige erste Nut ausgestaltet ist. Die Leisten sind dann symmetrisch gestaltet und können entsprechend einfacher positioniert werden. Die genanten ersten Nuten können vorteilhaft auch zum Anbringen von weiteren Elementen, wie beispielsweise Kabelhaltern für eine Kabelführung genutzt werden.

Ferner ist es besonders bevorzugt, dass die einzelne Leiste eine zweite Nut zum Einhaken eines Befestigungselements für die Halteklammer aufweist. Das Befestigungselement ist dabei vorteilhaft als eine Eindrehmutter gestaltet, die in diese zweite Nut von oben eingesetzt und dann durch eine 90°-Drehung unter den Flanken der Nut festgesetzt wird.

Auch ist es bevorzugt, dass die einzelne Leiste mindestens eine Nut zum Einsetzen eines Verbindungselements zwischen zwei Leisten aufweist. Als Verbindungselemente ist vorteilhaft ein Stab vorgesehen, der mit seinen beiden Enden in je eine von zwei hintereinander liegenden Leisten eingeschoben wurde und dann in dieser Position mit den Leisten verschraubt ist. Auf diese Weise können mehrere Leisten lagegenau hintereinander angeordnet werden, so dass sie zusammen eine geschlossene Leistenlinie bilden, auf die nachfolgend mehrere Solarmodule nebeneinander aufgelegt werden können. Besonders bevorzugt ist die Nut für derartige Verbindungselemente gleichzeitig die oben genannte erste Nut zum Einhaken der Halteklammern.

Entsprechend ist die erfindungsgemäße Aufgabe ferner mit einem Verfahren zum Befestigen von mindestens einem Solarmodul auf einer Dachkonstruktion gelöst, mit den Schritten: ortsfestes Anbringen eines Trapezblechs auf der Dachunterkonstruktion, ortsfestes Anbringen mindestens einer Leiste an dem Trapezblech und ortsfestes Anbringen mindestens einer Halteklammer zum Haltern mindestens eines Solarmoduls an der mindestens einen Leiste.

Da wie erläutert das erfindungsgemäße Befestigungssystem besonders dazu angepasst ist, um Solarmodule nicht nur auf eine bestehende Dachhaut außen aufzusetzen, sondern diese in der Dachhaut zu integrieren, wird vorteilhaft das Trapezblech im Austausch zu einer andersartigen Dachhaut, insbesondere einer Lage Dachpfannen, an der Dachunterkonstruktion angebracht.

Ferner wird entsprechend bevorzugt die mindestens eine Leiste mittels eines Halteelements an dem Trapezblech angebracht wird, an dem die Leiste formschlüssig eingehakt wird.

Darüber hinaus werden, wie erläutert, vorzugsweise zwei Leisten an einander gegenüberliegend angeordneten Halteelementen formschlüssig eingehakt und auf diese Weise an dem Trapezblech angebracht, auf denen nachfolgend mindestens ein Solarmodul aufgesetzt wird.

Auch ist entsprechend die einzelne Leiste an einer ihrer Seiten mit einer ersten Nut zum Einhaken des Halteelements gestaltet worden.

Alternativ oder zusätzlich ist die einzelne Leiste mit einer zweiten Nut zum Einhaken eines Befestigungselements für die Halteklammer gestaltet worden.

Schließlich ist in Entsprechung zum oben genannten Befestigungssystem bei dem erfindungsgemäßen Verfahren die einzelne Leiste mit mindestens einer Nut zum Einsetzen eines Verbindungselements zwischen zwei Leisten gestaltet worden.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:
- Fig. 1: ein erstes Schaubild zur Veranschaulichung eines Ausführungsbeispiels des erfindungsgemäßen Verfahrens und des damit geschaffenen Befestigungssystems, und

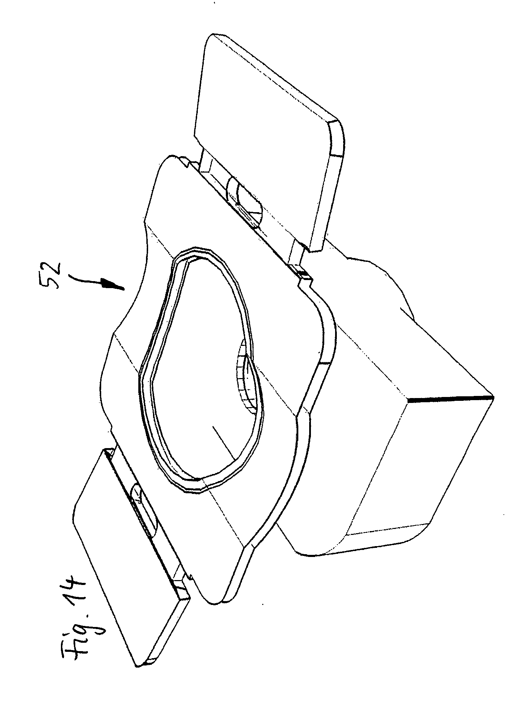

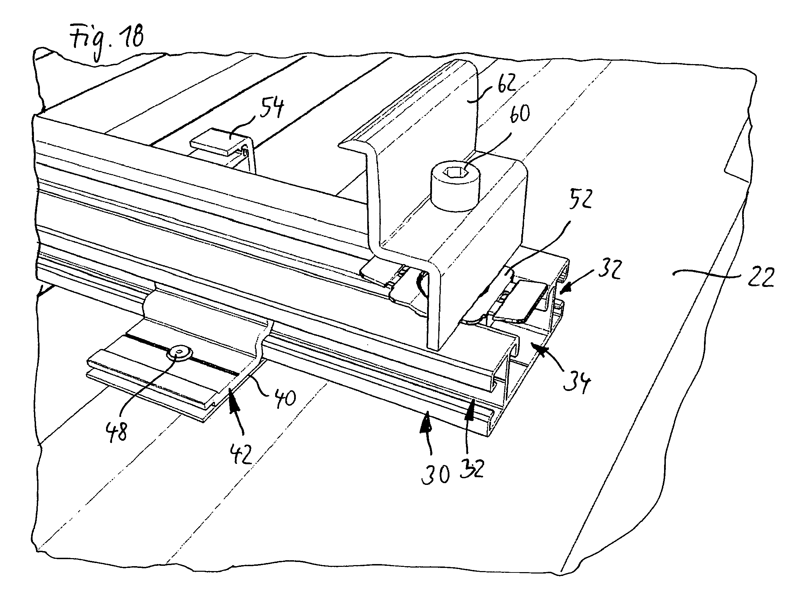

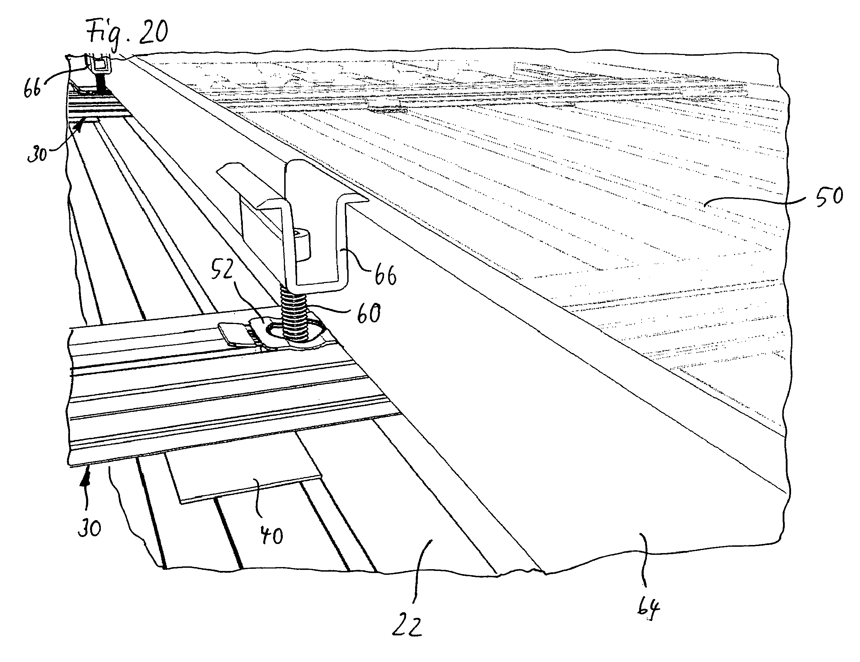

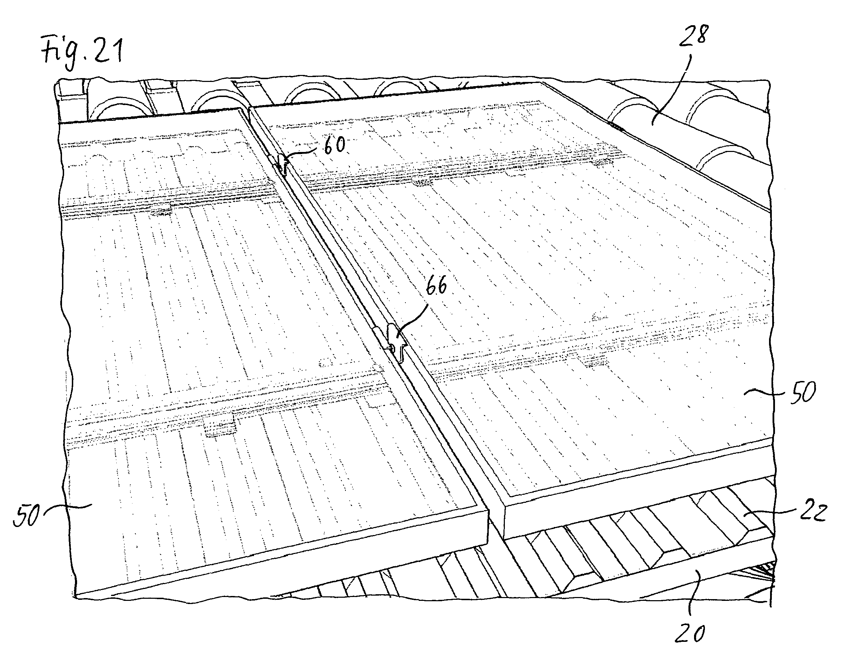

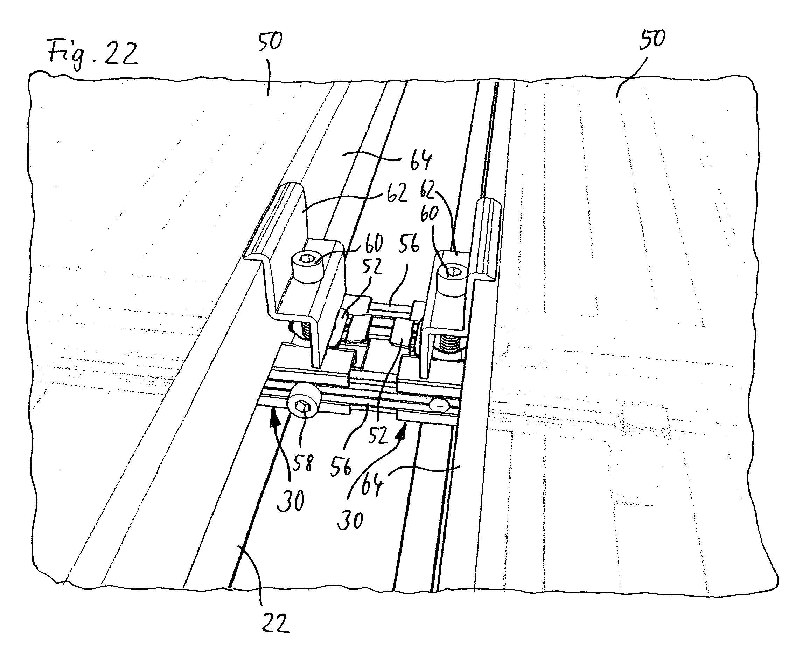

- Fig. 2 bis 24: jeweils ein weiteres Schaubild zur Veranschaulichung des Ausführungsbeispiels gemäß Fig. 1.

### Detaillierte Beschreibung des Ausführungsbeispiels

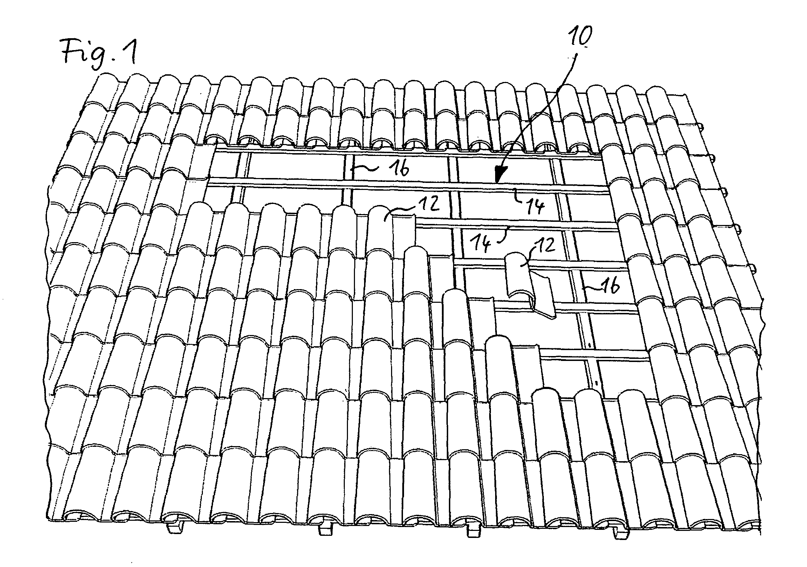

In Fig. 1 ist dargestellt, dass gemäß dem ersten Schritt des dargestellten Verfahrens zum Befestigen von Solarmodulen an einer Dachunterkonstruktion 10 jener Dachbereich festgelegt wird, dem nachfolgend eine Dacheindeckung in Gestalt von Dachpfannen 12 entnommen wird. Dabei sind außer einem Bereich, in dem später ein Modulfeld aus einzelnen Solarmodulen aufgebaut wird, auch noch jeweils eine Reihe von Dachpfannen am oberen Rand des späteren Modulfeldes und an den beiden seitlichen Rändern zu entnehmen. Diese zusätzlichen Reihen werden insbesondere auch daher entnommen, um mehr Arbeitraum zu schaffen.

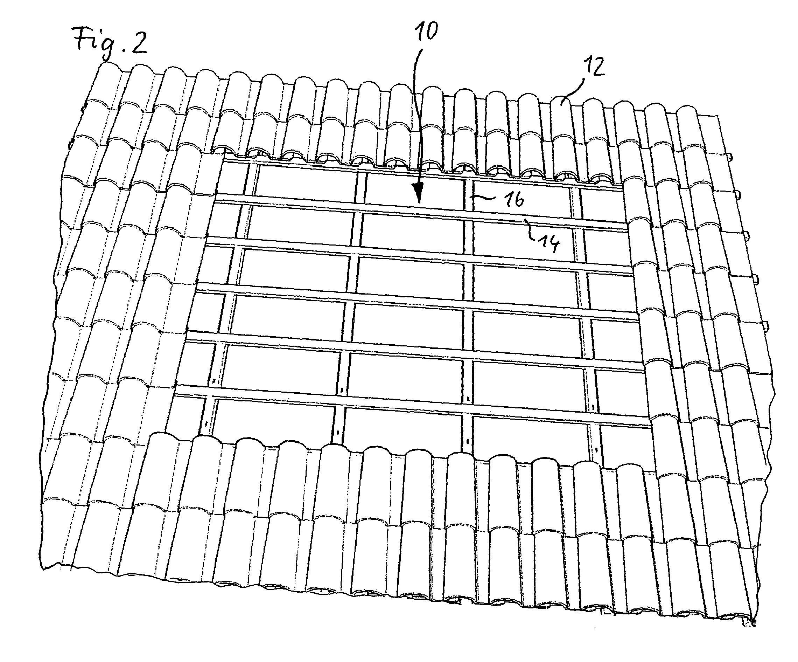

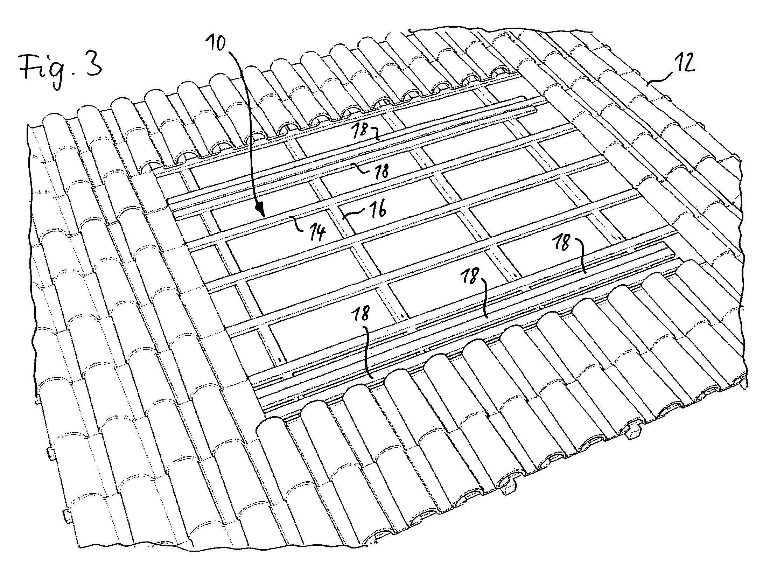

Nachfolgend vergewissert sich der Monteur des aufzubauenden Modulfeldes gemäß Fig. 2, dass die Dachunterkonstruktion 10 sich in einem guten Zustand befindet und insbesondere deren Dachlatten 14 gut an zugehörigen Sparren 16 befestigt sind. Vorzugsweise sind bzw. werden die Dachlatten 14 an den Sparren 16 verschraubt. Schlechte oder alte Dachlatten 14 sind zu ersetzen. Ferner werden gemäß Fig. 3 in den Bereichen des oberen und unteren Randes des freigelegten Öffnungsbereichs in den Dachpfannen 12 zusätzliche Dachlatten 18 angebracht, um zu verhindern, dass dort nachfolgend angebrachte Schürzen 20 und 22 durchhängen.

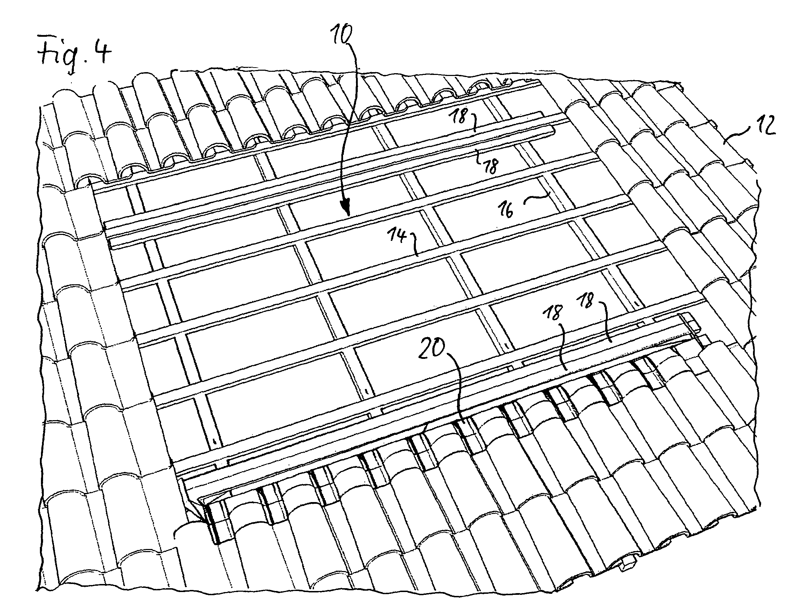

Als weiterer Verfahrensschritt wird nachfolgend die untere Schürze 20, die aus einem in der Fläche teilweise verformbaren und zugleich wasserdichten Material gestaltet ist, auf den Dachlatten befestigt und dabei einen Teil der Dachpfannen 12 überdeckend eingepasst (siehe Fig. 4). Danach werden die äußeren oberen Eckereiche der Schürze 20 aufgebogen und gefaltet. Dann wird der gesamte obere Rand der Schürze 20 über deren gesamte Länge umgefaltet. Dies verhindert, dass Wasser bei erhöhtem Winddruck und niedriger Dachneigung über die Schürze 20 hinweg in das Innere der Dachunterkonstruktion eindringen kann.

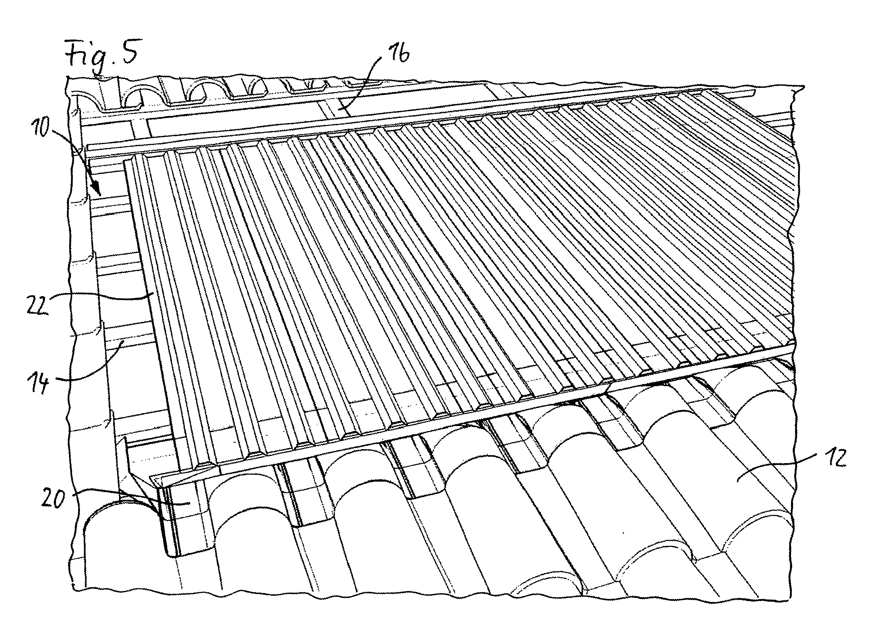

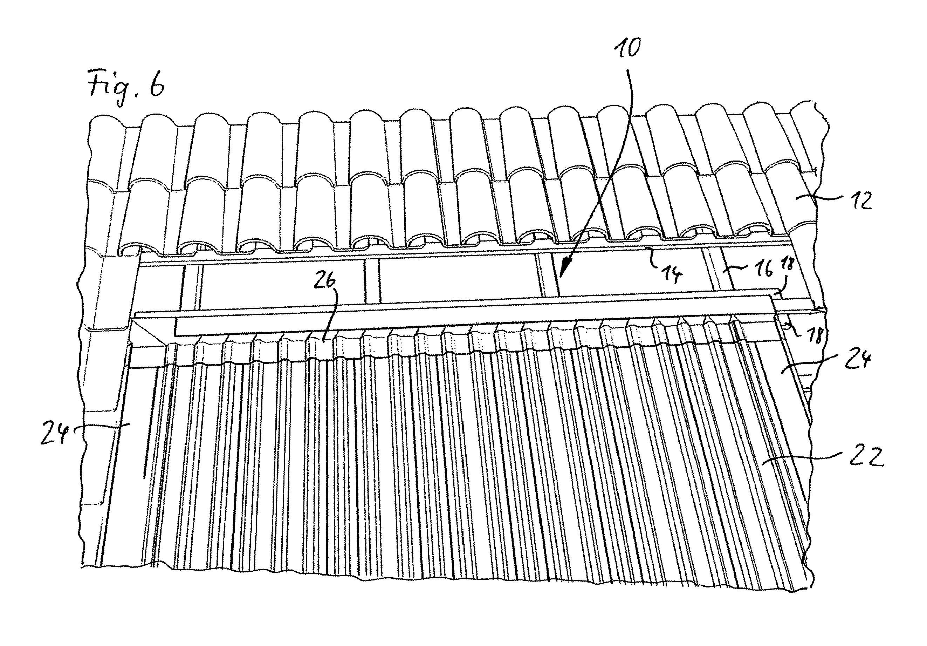

Nachfolgend werden gemäß Fig. 5 in den zuvor hergestellten Öffnungsbereich der Dachpfannen 12 mehrere Trapezbleche 22 teilweise überlappend derart auf die Dachlatten 14 und 18 aufgelegt, dass diese einander teilweise überlappen, die Schürze 20 teilweise überlappen und ferner am oberen und den seitlichen Rändern der Trapezblechfläche ein vordefinierter Restabstand verbleibt. Die Schürze 20 wird dabei von den Trapezblechen 22 mindestens 8 cm überlappt. Die Trapezbleche 22 werden mit geeigneten (nicht dargestellten Befestigungsmitteln, insbesondere in Form von Schrauben, von unten oder von oben durch die Trapezbleche 22 hindurch an den Dachlatten 14 und gegebenenfalls auch 18 derart befestigt, dass die damit hergestellte Trapezblechfläche in dem vorherigen Öffnungsbereich der Dachpfannen 12 eine Fläche darstellt, welche den einwirkenden Wind-und Schneebelastungen standhält. An den seitlichen Rändern der Trapezblechfläche wird beidseitig von dieser jeweils ein Einfass- bzw. Anschlussblech 24 aufgelegt, welches einerseits den bestehenden Restabstand bis zu den Dachpfannen 12 teilweise füllt und andererseits die Trapezbleche 22 etwas überlappt (siehe Fig. 6). Bei der Verlegung der Trapezbleche 22 und der beiden Anschlussbleche 24 ist darauf zu achten, dass die Schürze 20 nicht beschädigt wird. Die Schürze 20 und die Anschlussbleche 24 sind derart gestaltet, dass sich die Schürze 20 an ihren äußeren Endbereichen unter den Anschlussblechen 24 bis nach außen erstreckt und dort an seitlichen Aufkantungen der Anschlussbleche 24 hochgezogen und umgebogen werden kann.

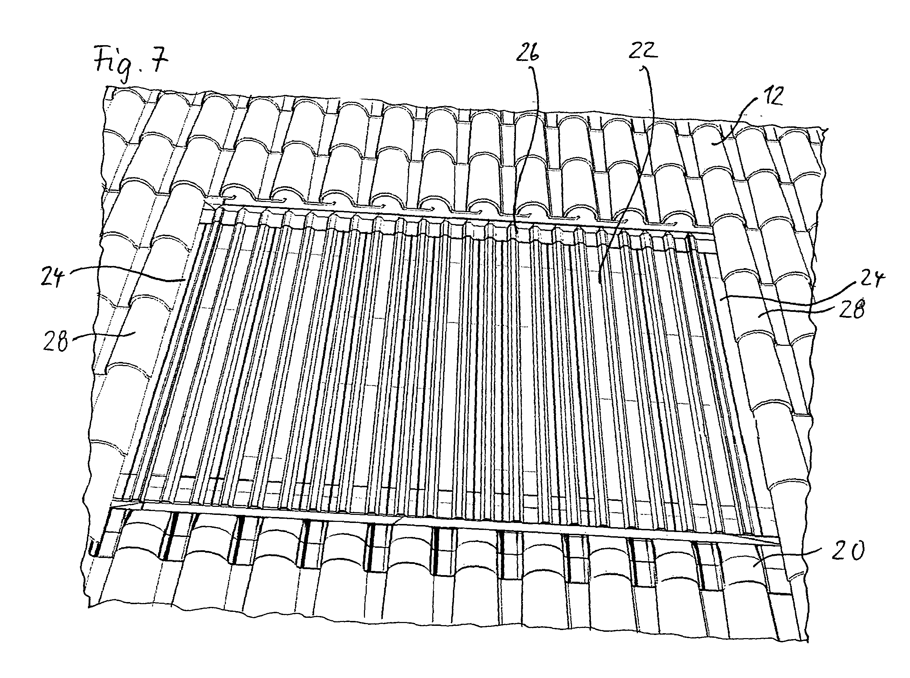

Als nächster Verfahrensschritt wird eine obere Schürze 26 am oberen Rand der Trapezblechfläche bzw. der zuvor hergestellten Öffnungsbereichs in den Dachpfannen 12 aufgesetzt (siehe Fig. 6). Hierbei wird vorzugsweise die gleiche Technik verwendet, wie bereits für die untere Schürze 20. Erst nachdem die obere Schürze 26 eingepasst worden ist, werden auch an dieser die äußeren Eckbereiche aufgebogen und um die äußeren Ränder der Anschlussbleche 24 herum gefaltet. Dann wird nochmals der gesamte obere Rand der Schürze 26 über deren gesamter Länge umgefaltet. Dieser Vorgang verhindert ebenfalls das spätere Eindringen von Wasser in das Innere des Daches. Es werden dann solche Dachpfannen 28 wiedereingesetzt, die an den Rändern des Öffnungsbereichs zusätzlich abgedeckt worden waren. Diese Dachpfannen 28 überdecken teilweise eine der beiden Schürzen 20 und 26 sowie eines der beiden Anschlussbleche 24 und stellen auf diese Weise eine Abdichtung am Randbereich der Trapezblechfläche her (siehe Fig. 7). Am oberen Rand überdecken die Dachpfannen 28 die Schürze 26 mindestens 8 cm. Im Nachgang wird jener Hohlraum, der sich zwischen Hochsicken an den Trapezblechen 22 und der Schürze 20 ergibt, mittels einer ausgewählten Keildichtung (insbesondere einem so genannten Kompriband) geschlossen. In derselben Vorgehensweise wird jener Hohlraum, der sich zwischen den Dachpfannen 12 und der Schürze 26 ergibt, verschlossen. Bei einzelnen Dachpfannen-Systemen wird der Hohlraum zwischen den Dachpfannen 12 und den Schürzen 20 oder 26 mit geeigneter Mörtelmasse versiegelt. Das derart gestaltete Dach ist nach diesen Schritten wieder dicht.

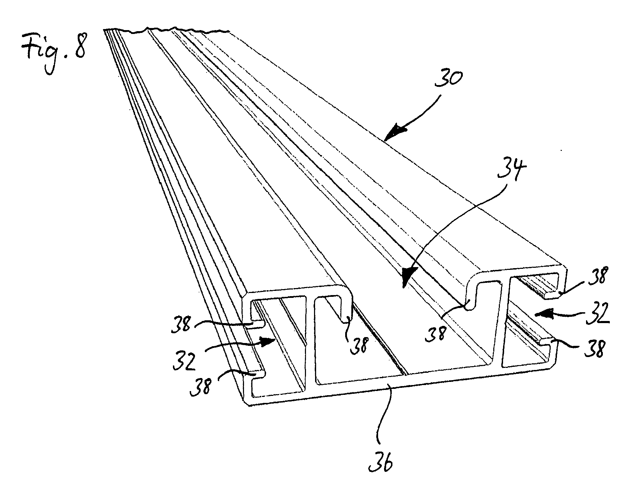

In Fig. 8 ist eine Leiste 30 des Befestigungssystems veranschaulicht, die als Aluminium-Strangpressprofil hergestellt ist und dabei an ihren beiden Längsseiten jeweils eine von seitlich zugängliche Nut 32 und in ihrem Mittelbereich ein von oben zugängliche Nut 34 aufweist. An der Unterseite ist die Leiste 30 mit einer geschlossenen Wandung 36 gestaltet. Die Nuten 32 und 34 sind jeweils hinterschnitten gestaltet, sie weisen also jeweils beidseits der zugehörigen Nut einen oberen Randbereich 38 aus Material der Leiste 30 auf, der in die entsprechende Nut hineinragt.

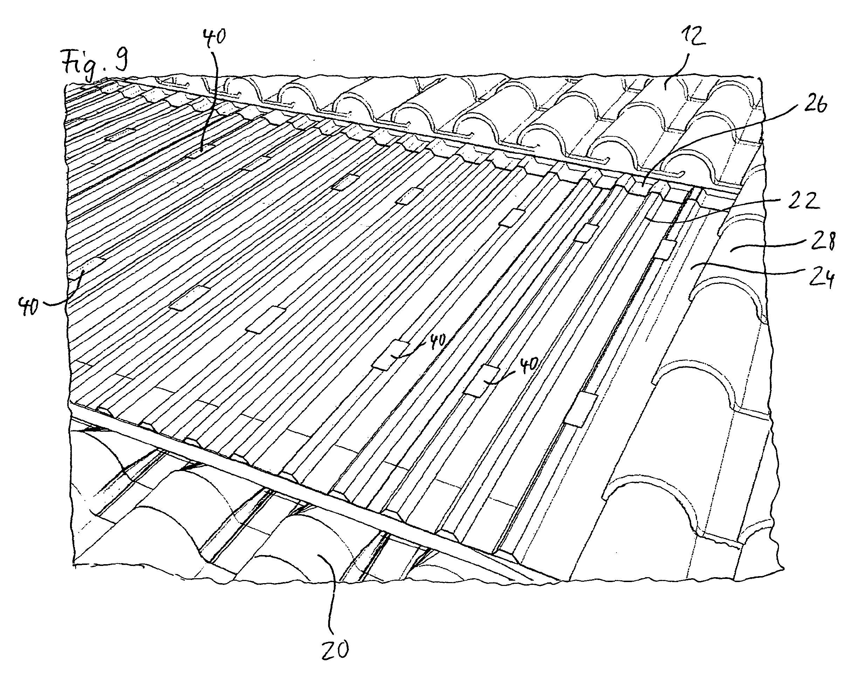

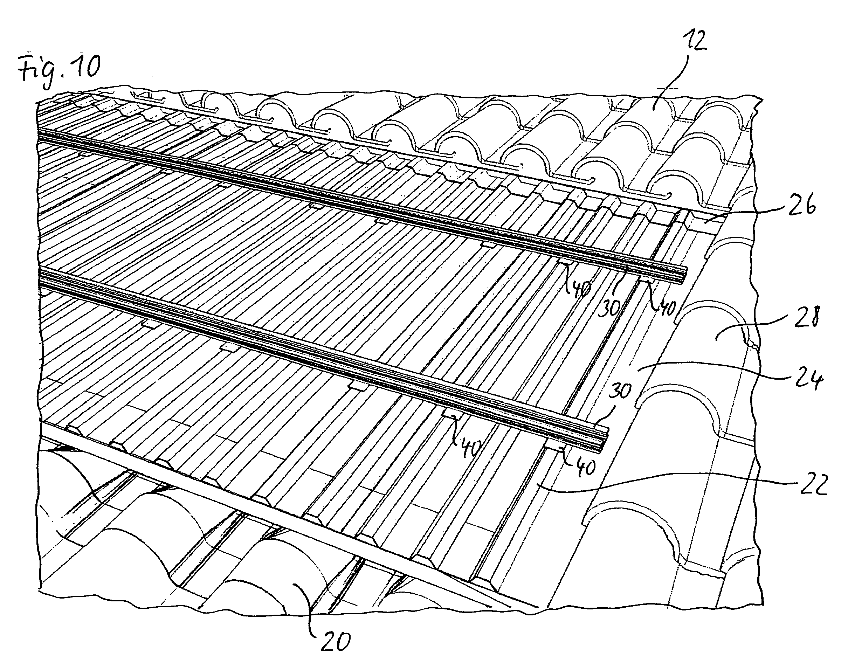

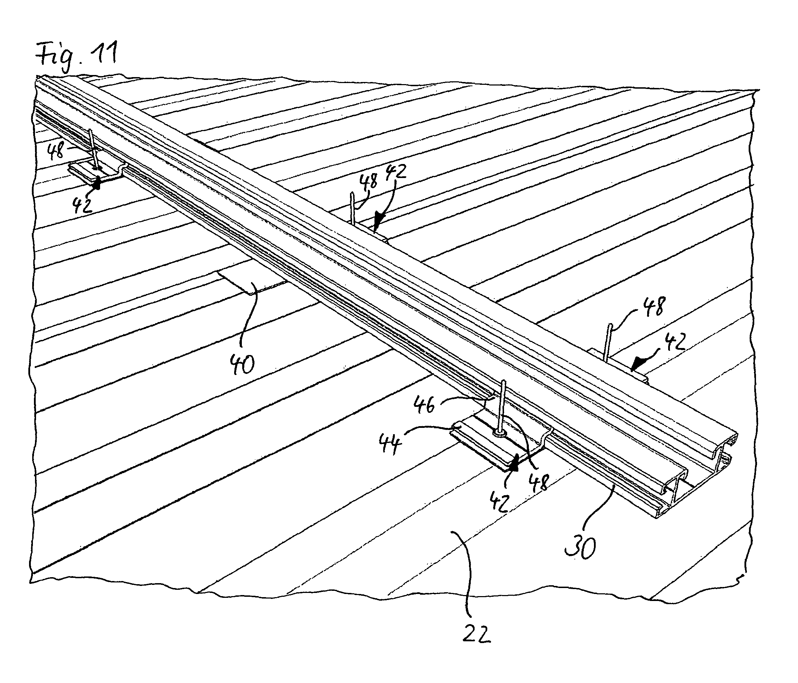

Die Leiste 30 ist dazu vorgesehen, um an den Trapezblechen 22 Solarmodule zu befestigen. Dazu wird, wie in Fig. 9 dargestellt, auf der Trapezblechfläche an einzelnen vorbestimmten Bereichen, nämlich insbesondere an einzelnen Kopfbereichen der trapezförmigen Sicken der Trapezbleche 22 Dichtungsstreifen 40 mit einer Größe von vorliegend 120 mm auf 40 mm und einer Dicke von 1 mm aufgelegt und gegebenenfalls dort festgeklebt. Nachfolgend werden mehrere Leisten 30 derart auf die Trapezbleche aufgelegt, so dass sie quer zur Sickenrichtung der Trapezbleche 22 und mittig auf den Dichtungsstreifen 40 liegen (siehe Fig. 10). Gemäß Fig. 11 werden nachfolgend Halteelemente 42, die einen flächigen Fußbereich 44 und einen doppelt gestuften Armbereich 46 aufweisen und selbst als Abschnitt eines Aluminium-Strangpressprofils hergestellt sind, mit ihrem Armbereich 46 in eine der Nuten 32 eingehakt und mit ihrem Fußbereich 44 auf einen zugehörigen Dichtstreifen 40 aufgelegt. Insbesondere werden an den Endbereichen von Leisten 30 zwei Halteelemente 42 einander gegenüberliegend an der zugehörigen Leiste 30 angeordnet.

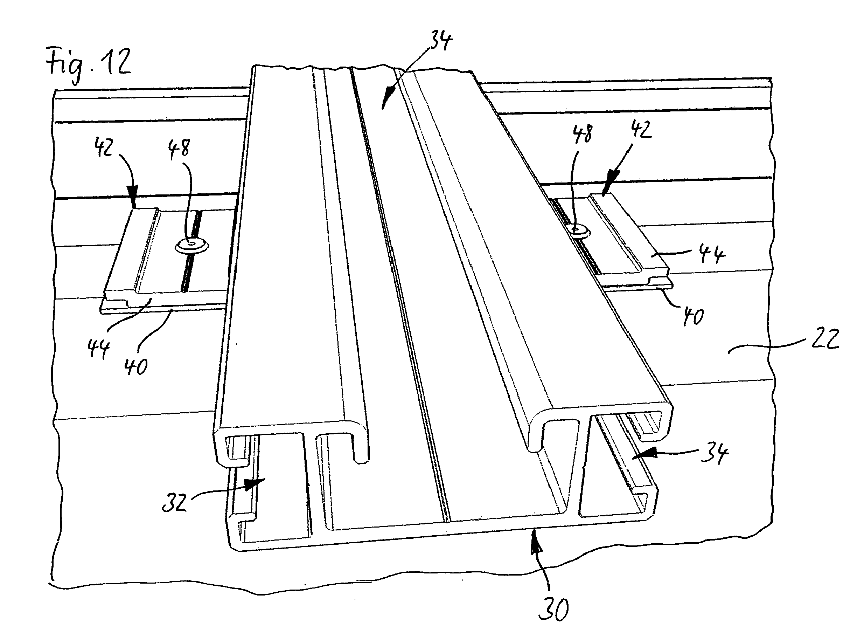

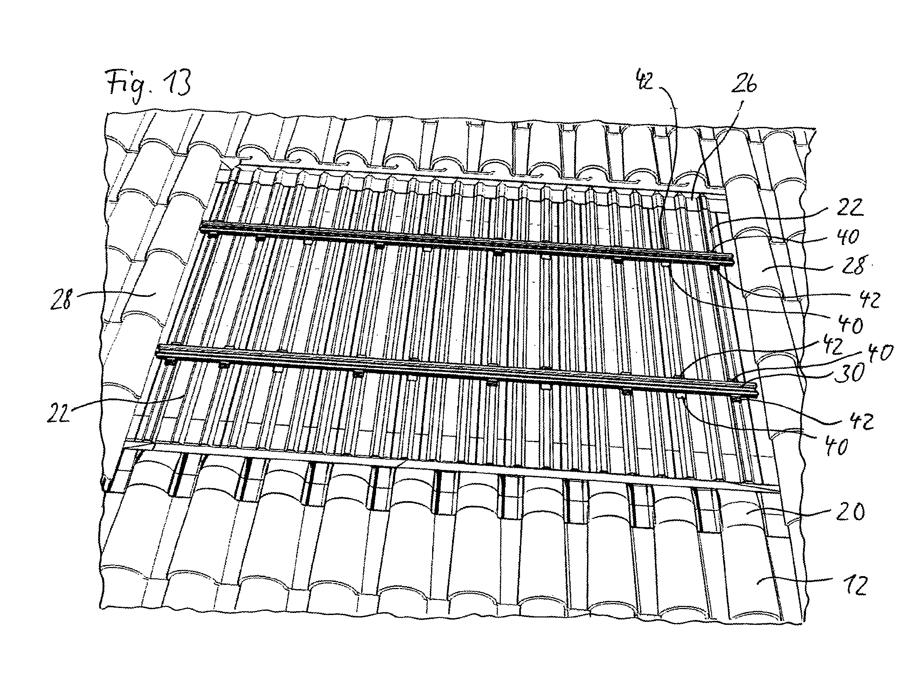

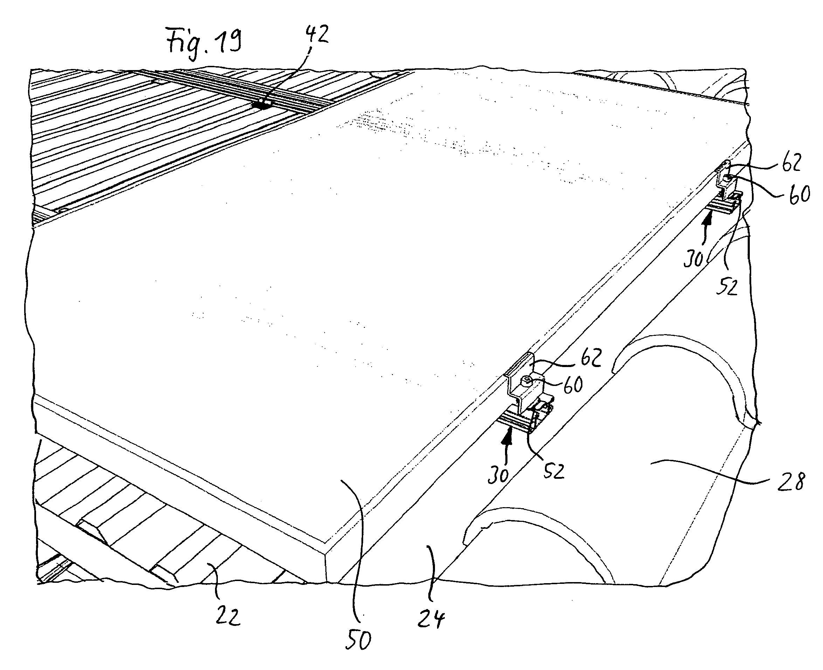

Die derart an den Leisten 30 eingehakten Halteelemente 42 werden nachfolgend durch die Dichtstreifen 40 hindurch mit den Trapezblechen 22 vernieten. Für die Befestigung der Halteelemente 42 an den Trapezblechen 42 wird pro Halteelement 42 eine Bohrung mit einem Durchmesser von ca. 5 mm durch das Halteelement 42, den Dichtungsstreifen 40 und das zugehörige Trapezblech 22 hergestellt. In diese Bohrungen werden Blindnieten 48 in Gestalt von Edelstahlnieten eingesetzt. Bei einer nicht dargestellten Alternative werden an Stelle der Edelstahlnieten selbstbohrende Edelstahlschrauben mit einer vormontierten Dichtscheibe verwendet. Auf diese Weise werden die Leisten 30 an den Trapezblechen 22 derart ortsfest angebracht (siehe ebenfalls Fig. 11 sowie Fig. 12 und 13), dass auf ihnen nun Solarmodule 50 montiert werden können (siehe Fig. 19).

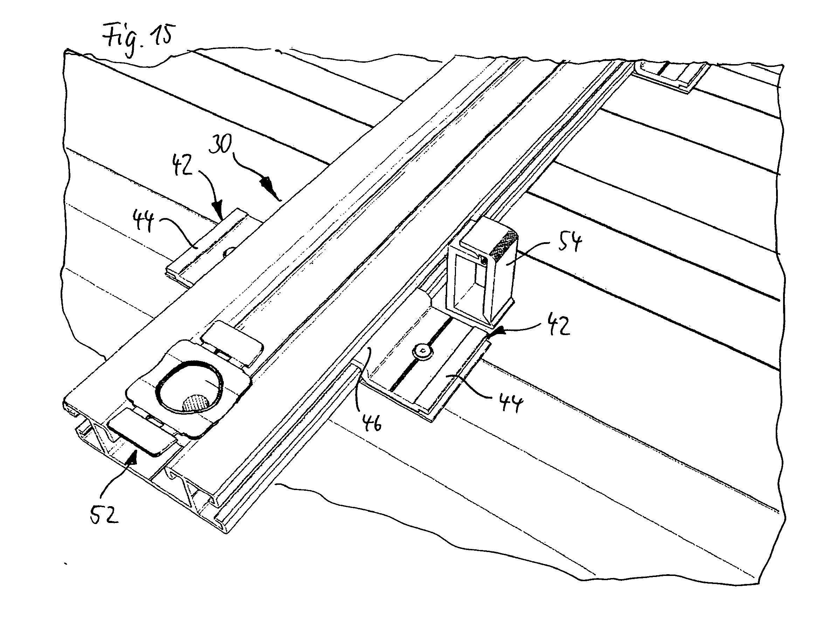

Dazu werden Befestigungselemente 52 in Gestalt von Eindrehmuttern in die Nut 34 eingesetzt. Die Eindrehmuttern werden entsprechend einer vordefinierten Modulbreite in die Leisten 30 eingesetzt und durch eine Drehung um 90° unter den Randbereichen 38 der Nut 34 eingehakt. Zusätzlich können in den Nuten 32 zur Kabelführung vorgesehene Kabelhalter 54 eingesetzt werden (siehe Fig. 15). Der Abstand zwischen den Kabelhaltern 54 beträgt etwa 50 cm.

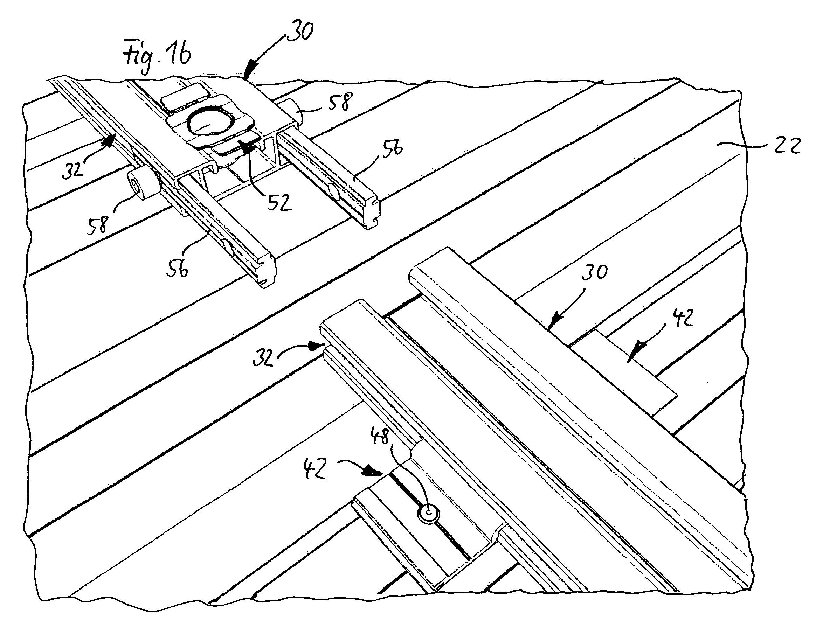

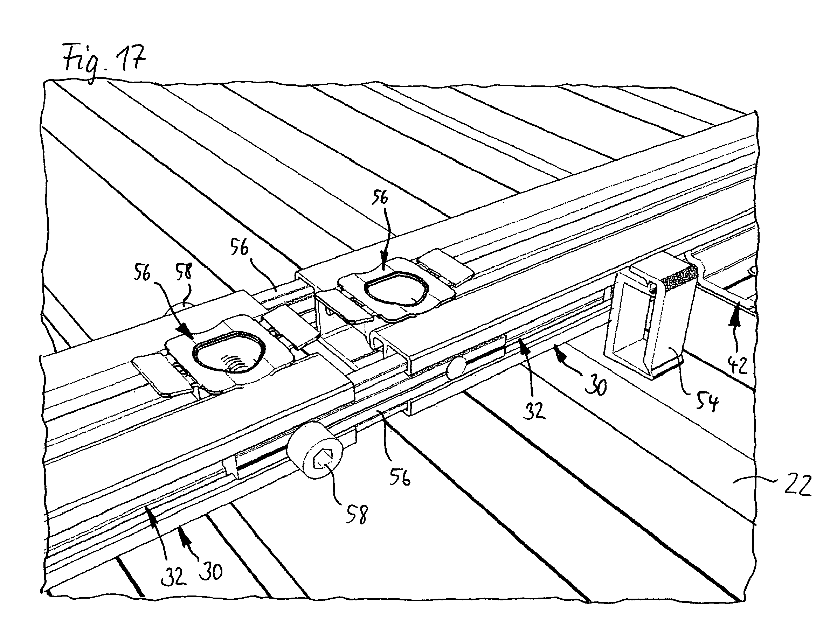

An eventuellen Übergängen von einer Leiste 30 zur nächsten, den so genannten Profilstößen, werden insbesondere Querkraft aufnehmende Verbindungen mittels extra dafür vorgesehener Verbindungselemente 56 geschaffen. Diese Verbindungselemente 56 sind jeweils stabförmig gestaltet und mit einem Endbereich stirnseitig in eine Nut 32 eingeschoben, während ihr anderer Endbereich in eine zugehörige Nut 32 einer benachbarten Leiste 30 geschoben ist (siehe Fig. 16). Das einzelne Verbindungselement 56 kann dabei an beiden Leisten ortsfest angebracht werden (Profilverbindung) oder ist nur an einer Leiste 30 mittels einer Schraube 58 ortsfest angebracht (siehe Fig. 17), so dass die benachbarte Leiste 30 insbesondere beim Ausgleich von Wärmedehnungen entlang gleiten kann (Dehnungsstoß). Wegen temperaturbedingter Längendehnung der Leisten 30 werden diese nach einer durchlaufenden Schienenlänge von 12 m beabstandet. Der Abstand zwischen derart beabstandeten Leisten beträgt mindestens 2 cm.

Die Befestigungselemente 52 dienen als Schraubgrund für eine Zylinderschraube 60 mit Gewindegröße M8, die mit einer gestuft gestalteten Halteklammer 62 zusammenwirkt. Um eine optimale Klemmung zu erzielen, ist die Höhe der Halteklammern 62 und die Länge der Zylinderschrauben 60 in Abhängigkeit von der Höhe eines Rahmens 64 der jeweiligen Solarmodule 50 gewählt.

Zur Befestigung zwischen zwei Solarmodulen 50 wird eine als V gestaltete Halteklammer 66, eine so genannte Mittelklammer, in entsprechender Weise mittels Zylinderschraube 60 und einem zugehörigen Befestigungselement 52 an einer Leiste 30 festgesetzt. Die Halteklammern 66 und zugehörigen Zylinderschrauben 60 werden dabei zunächst lose eingesetzt und erst nach dem Auflegen von Solarmodulen 50 festgesetzt. Im Hinblick auf die Montagereihenfolge und die Montagerichtung ist das derartige Befestigungssystem variabel einsetzbar.

An Dehnungsstößen wird eine Trennung des Modulfeldes dadurch erreicht, dass beiderseits der zugehörigen Verbindungselemente 56 gestufte Halteklammern 62 verwendet werden. Wegen der Anordnung der Verbindungselemente 56 und Befestigungselemente 52 in getrennten Nuten 32 und 34 muss dabei der Abstand zwischen den beteiligten Solarmodulen 50 vorteilhaft lediglich ca. 8 cm betragen.

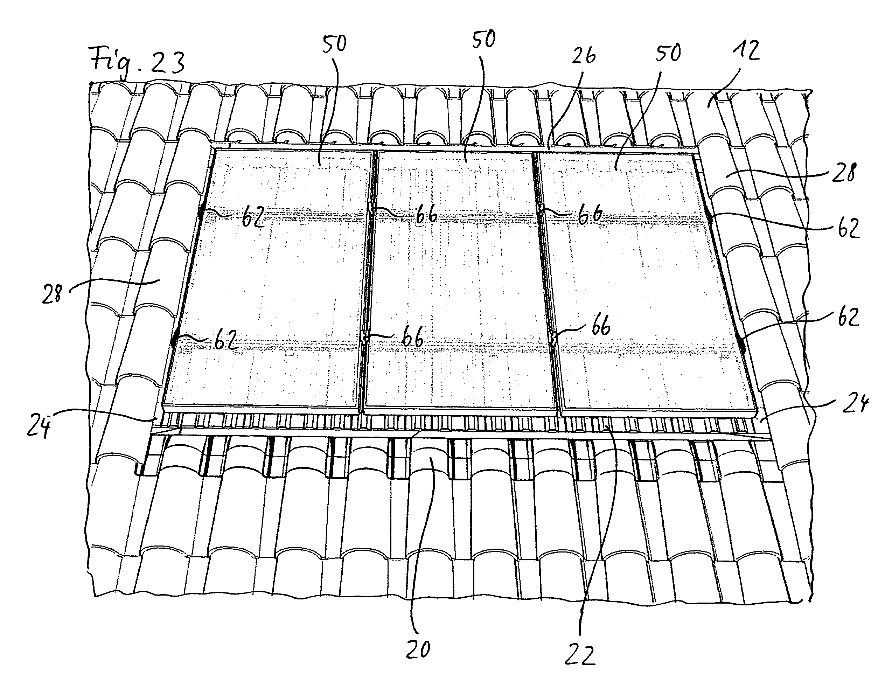

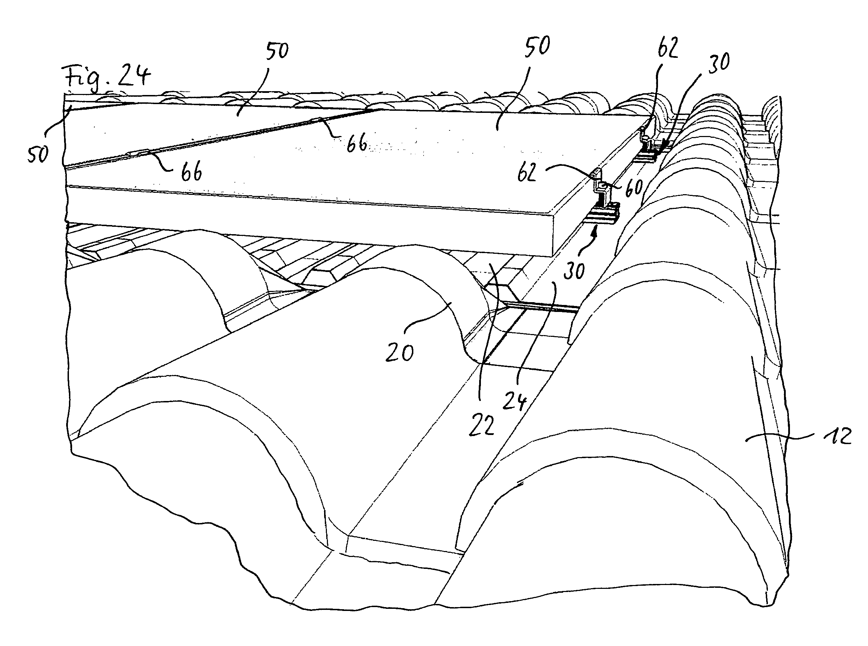

Die Fig. 23 und 24 zeigen das derart fertig montierte und in die Dachhaut des zuvor bestehenden Schindeldaches integrierte Solarmodulfeld.

Abschließend sei angemerkt, dass sämtlichen Merkmalen, die in den Anmeldungsunterlagen und insbesondere in den abhängigen Ansprüchen genannt sind, trotz dem vorgenommenen formalen Rückbezug auf einen oder mehrere bestimmte Ansprüche, auch einzeln oder in beliebiger Kombination eigenständiger Schutz zukommen soll.

### Bezugszeichenliste

- 10: Dachunterkonstruktion
- 12: Dachpfanne
- 14: Dachlatte
- 16: Sparren
- 18: zusätzliche Dachlatte
- 20: untere Schürze
- 22: Trapezblech
- 24: Anschlussblech
- 26: obere Schürze
- 28: Dachpfannen am Rand des Öffnungsbereichs
- 30: Leiste
- 32: Nut
- 34: Nut
- 36: Wandung
- 38: Randbereich
- 40: Dichtungsstreifen
- 42: Halteelement
- 44: Fußbereich
- 46: Armbereich
- 48: Blindniet
- 50: Solarmodul
- 52: Befestigungselement
- 54: Kabelhalter
- 56: Verbindungselement
- 58: Schraube
- 60: Zylinderschraube
- 62: Halteklammer
- 64: Rahmen
- 66: Halteklammer

## Patentansprüche

1. Befestigungssystem für Solarmodule mit einem auf einer Dachunterkonstruktion (10) ortsfest angebrachten Trapezblech (22), mindestens einer Leiste (30), welche an dem Trapezblech (22) ortsfest angebracht ist, und mindestens einer Halteklammer (62, 66) zum Haltern mindestens eines Solarmoduls (50), welche an der mindestens einen Leiste (30) ortsfest angebracht ist.

2. Befestigungssystem nach Anspruch 1,
bei dem das Trapezblech (22) im Austausch zu einer andersartigen Dachhaut, insbesondere einer Lage Dachpfannen (12), an der Dachunterkonstruktion (10) angebracht ist.

3. Befestigungssystem nach Anspruch 1 oder 2,
bei dem die mindestens eine Leiste (30) mittels eines Halteelements (42) an dem Trapezblech (22) angebracht ist, an dem die Leiste (30) formschlüssig eingehakt ist.

4. Befestigungssystem nach einem der Ansprüche 1 bis 3,
bei dem zwei Leisten (30) an einander gegenüberliegend angeordneten Halteelementen (42) formschlüssig eingehakt und auf diese Weise an dem Trapezblech (22) angebracht sind, auf denen nachfolgend mindestens ein Solarmodul (50) aufgesetzt ist.

5. Befestigungssystem nach Anspruch 3 oder 4,
bei dem die einzelne Leiste (30) an einer ihrer Seiten eine erste Nut (32) zum Einhaken des Halteelements (42) aufweist.

6. Befestigungssystem nach einem der Ansprüche 3 bis 5,
bei dem die einzelne Leiste (30) eine zweite Nut (34) zum Einhaken eines Befestigungselements (52) für die Halteklammer (62, 64) aufweist.

7. Befestigungssystem nach einem der Ansprüche 1 bis 6,
bei dem die einzelne Leiste (30) mindestens eine Nut (32) zum Einsetzen eines Verbindungselements (56) zwischen zwei Leisten (30) aufweist.

8. Verfahren zum Befestigen von mindestens einem Solarmodul (50) auf einer Dachunterkonstruktion (10) mit den Schritten: ortsfestes Anbringen eines Trapezblechs (22) auf der Dachunterkonstruktion (10), ortsfestes Anbringen mindestens einer Leiste (30) an dem Trapezblech (22) und ortsfestes Anbringen mindestens einer Halteklammer (62, 64) zum Haltern mindestens eines Solarmoduls (50) an der mindestens einen Leiste (30).

9. Verfahren nach Anspruch 8,
bei dem das Trapezblech (22) im Austausch zu einer andersartigen Dachhaut, insbesondere einer Lage Dachpfannen (12), an der Dachunterkonstruktion (10) angebracht wird.

10. Verfahren nach Anspruch 8 oder 9,
bei dem die mindestens eine Leiste (30) mittels eines Halteelements (42) an dem Trapezblech (22) angebracht wird, an dem die Leiste (30) formschlüssig eingehakt wird.

11. Verfahren nach einem der Ansprüche 8 bis 10,
bei dem zwei Leisten (30) an einander gegenüberliegend angeordneten Halteelementen (42) formschlüssig eingehakt und auf diese Weise an dem Trapezblech (22) angebracht werden, auf denen nachfolgend mindestens ein Solarmodul (50) aufgesetzt wird.

12. Verfahren nach Anspruch 10 oder 11,
bei dem die einzelne Leiste (30) an einem ihrer Seiten mit einer erste Nut (32) zum Einhaken des Halteelements (42) gestaltet worden ist.

13. Verfahren nach einem der Ansprüche 10 bis 12,
bei dem die einzelne Leiste (30) mit einer zweiten Nut (34) zum Einhaken eines Befestigungselements (52) für die Halteklammer (62, 64) gestaltet worden ist.

14. Verfahren nach einem der Ansprüche 8 bis 13,
bei dem die einzelne Leiste (30) mit mindestens einer Nut (32) zum Einsetzen eines Verbindungselements (56) zwischen zwei Leisten (30) gestaltet worden ist.
